# FASCICULE DE BREVET EUROPEEN

(11) **EP 2 936 208 B1**
(45) Date de publication et mention de la délivrance du brevet: **07.09.2016**
(21) Numéro de dépôt: 13824624.4
(22) Date de dépôt: 23.12.2013
(51) Int. Cl.: G01T 1/24

(54) **PROCEDE ET DISPOSITIF DE DETECTION DE RAYONNEMENT IONISANT A DETECTEUR SEMICONDUCTEUR**
AUF HALBLEITERDETEKTOR BASIERENDES VERFAHREN UND VORRICHTUNG ZUR ERFASSUNG IONISIERENDER STRAHLUNG
SEMICONDUCTOR-DETECTOR-BASED METHOD AND DEVICE FOR DETECTING IONISING RADIATION

(30) Priorité: 21.12.2012 FR 1262576
(43) Date de publication de la demande: 28.10.2015
(73) Titulaire: Commissariat à l'Energie Atomique et aux Energies Alternatives, 75015 Paris (FR)
(72) Inventeur: ROSTAING, Jean-Pierre, F-38260 La Côte Saint-andre (FR)
(74) Mandataire: Thibon, Laurent
(86) Numéro de dépôt international: PCT/FR2013/053252
(87) Numéro de publication internationale: WO 2014/096746

(56) Documents cités:
- WO-A1-01/27656
- WO-A1-03/071787
- FR-A1- 2 864 731
- US-A1- 2007 029 494

## Description

### Domaine de l'invention

La présente invention concerne un procédé et un dispositif de détection de rayonnement ionisant à détecteur semiconducteur.

### Etat de la technique

Dans un dispositif de détection de rayonnement ionisant à détecteur en matériau semiconducteur, les photons entraînent la formation de charges dans le matériau semiconducteur qui sont collectées par des électrodes, réparties sur une face du détecteur. Chaque électrode est reliée à un circuit de lecture qui fournit de façon générale au moins deux signaux à partir des charges collectées par l'électrode : un signal binaire qui est représentatif de la détection d'un photon et un signal analogique représentatif du niveau d'énergie du photon détecté. Ces signaux sont transmis à un ordinateur qui peut, à partir du nombre de photons détectés et de leurs niveaux d'énergie, déterminer certaines propriétés de l'objet ou de l'être vivant traversé par le rayonnement ionisant.

Dans certains cas, les charges créées par un photon peuvent se répartir entre deux électrodes adjacentes. Ce phénomène est appelé partage de charges. Chaque circuit de lecture relié à l'une de ces électrodes indique alors qu'il a détecté un photon et fournit un niveau d'énergie en fonction de la quantité de charges collectées par l'électrode associée. Il est donc nécessaire de prévoir des moyens de correction pour ne pas compter un nombre trop important de photons et pour attribuer un niveau d'énergie correct à chaque photon détecté. Les procédés de correction sont généralement mis en oeuvre par l'ordinateur qui analyse les signaux fournis par les circuits de lecture.

Toutefois, il serait souhaitable que les étapes de correction soient réalisées directement au niveau des circuits de lecture.

Les documents FR 2 864 731 et WO 03/071787 décrivent des dispositifs de détection de rayonnement ionisant.

Le document WO 01/27656 décrit également un dispositif de détection de rayonnement ionisant prenant en compte le phénomène de partage de charges entre plusieurs pixels.

### 15 Résumé de l'invention

Un objet de la présente invention est de prévoir un procédé et un dispositif de détection palliant tout ou partie des inconvénients de l'art antérieur.

Un autre objet de la présente invention est de prévoir un procédé et un dispositif de détection de rayonnement ionisant à détecteur en matériau semiconducteur dans lequel la correction de la détection des phénomènes de partage de charges est réalisée directement au niveau des circuits de lecture.

Un autre objet de la présente invention est que les circuits de lecture sont des circuits électroniques identiques.

Un autre objet de la présente invention est que le fonctionnement des circuits de lecture n'est pas perturbé même si de nombreux phénomènes de partage de charges se produisent simultanément.

Dans ce but, un mode de réalisation prévoit un dispositif de détection d'un rayonnement ionisant tel que défini par la revendication 1.

L'invention prévoit aussi un procédé de détection d'un rayonnement ionisant selon la revendication 13.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 représente, de façon partielle et schématique, un exemple de dispositif de détection de rayonnement ionisant ;
la figure 2 représente, de façon schématique, une partie d'un circuit de lecture du dispositif représenté en figure 1 ;
la figure 3 est un chronogramme de signaux fournis par le circuit de lecture de la figure 2 ;
la figure 4 représente, de façon schématique, un mode de réalisation d'un dispositif de détection de rayonnement ionisant selon l'invention ;
la figure 5 représente, de façon partielle et schématique, un exemple d'agencement des circuits de correction du dispositif de la figure 4 ;
la figure 6 représente, sous la forme d'un schéma-bloc, un mode de réalisation d'un procédé de correction selon l'invention ;
la figure 7 représente, de façon schématique, un mode de réalisation d'une partie du circuit de correction de la figure 4 ;
la figure 8 illustre un exemple de connexion entre les circuits de correction de deux circuits de correction adjacents ;
la figure 9 représente un exemple de chronogrammes de signaux fournis par un circuit de correction lors de la détection d'un photon ;
la figure 10 représente des exemples de chronogrammes illustrant un mode de réalisation d'un procédé pour déterminer si une coïncidence de détections de photons a lieu ;
les figures 11 et 12 représentent des exemples de chronogrammes de signaux fournis par deux circuits de correction de pixels adjacents lors d'une coïncidence de détections ; et
la figure 13 illustre les signaux émis et reçus par un mode de réalisation du circuit de correction.

Par souci de clarté, de mêmes éléments ont été désignés par de mêmes références aux différentes figures.

### Description détaillée

Dans la suite de la description, on entend par signal binaire un signal pouvant occuper deux états stables, un premier état appelé état bas ou '0' et un deuxième état appelé état haut ou '1'. En outre, sauf indication contraire, un signal est dit actif lorsqu'il est à l'état '1' et inactif lorsqu'il est à l'état '0'.

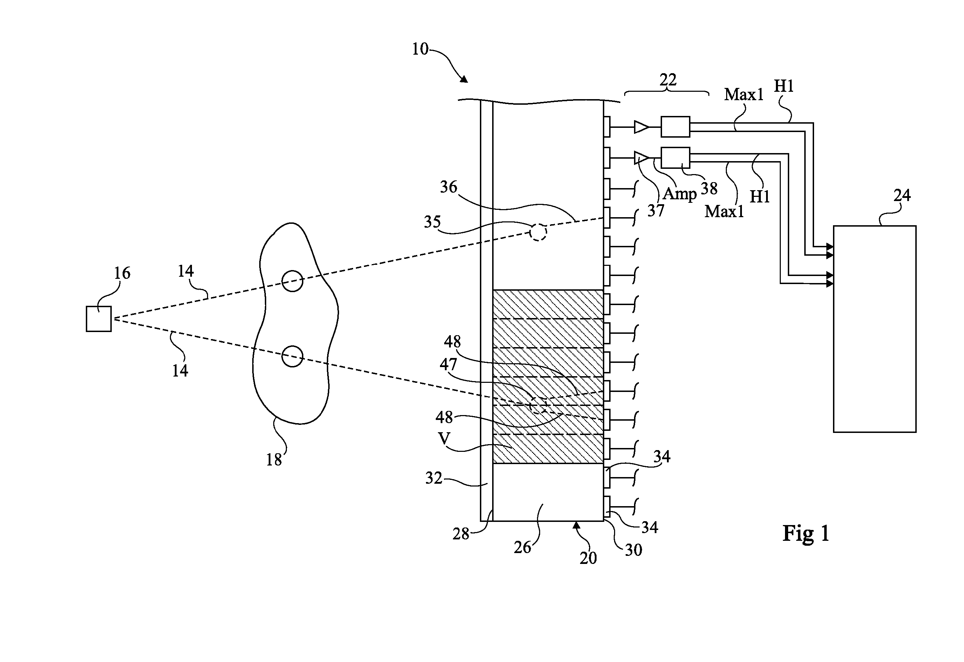

La figure 1 représente un exemple d'un dispositif 10 de détection de rayonnement ionisant 14, émis par une source 16 de rayonnement ionisant et ayant traversé un objet ou un être vivant 18. Le dispositif 10 comprend un capteur 20 de rayonnement ionisant en un matériau semiconducteur, des circuits électroniques de lecture 22 adaptés à fournir des signaux représentatifs de la détection de photons par le capteur 20 et un module de traitement 24 recevant les signaux fournis par les circuits de lecture 22. Seuls deux circuits de lecture sont représentés en figure 1.

Un exemple d'application d'un dispositif de détection de rayonnement ionisant est le contrôle non destructif de matériaux, la recherche de substances dangereuses ou illicites par exemple dans des bagages. Une autre application peut être la médecine et l'observation d'êtres vivants. Ces dispositifs de détection de rayonnement ionisant permettent de faire de l'imagerie des objets ou êtres vivants à contrôler.

Le capteur 20 comporte une plaque 26 d'un matériau semiconducteur, de préférence monocristallin, de forme généralement parallélépipédique ayant deux faces principales 28, 30, généralement opposées et parallèles. Dans les applications d'imagerie, la plaque 26 en matériau semiconducteur a généralement une épaisseur comprise entre quelques centaines de micromètres et quelques millimètres, voire quelques centimètres et une surface de quelques centimètres au carré voire quelques dizaines de centimètres au carré.

Le matériau semiconducteur peut être du tellurure de cadmium et de zinc (CdZnTe), du tellurure de cadmium (CdTe), de l'iodure de mercure (HgI₂), de l'arséniure de gallium (GaAs), du silicium (Si). Le rayonnement ionisant 14 peut comprendre des rayons alpha, bêta, X, gamma ou même des neutrons. Les neutrons ne constituent pas directement un rayonnement ionisant mais ils induisent des rayonnements ionisants par les particules créées lors de leur interaction avec la matière.

La face 28 est recouverte d'une ou de plusieurs électrodes 32 dénommées cathodes et l'autre face 30 est recouverte de plusieurs électrodes 34 dénommées anodes. Chaque électrode 34 est reliée à l'un des circuits de lecture 22. En fonctionnement, les rayonnements ionisants 14 d'énergie suffisante interagissent avec le matériau semiconducteur pour créer des paires électrons/trous. On a représenté schématiquement en figure 1 par un cercle 35 en traits pointillés un exemple d'interaction et par une ligne 36 en traits pointillés le parcours d'électrons jusqu'à une électrode 34. Les électrodes 32, 34 servent à polariser la plaque 26 de manière à permettre la migration des électrons et des trous vers les électrodes 32, 34. Dans la plupart des matériaux semiconducteurs usuels cités précédemment, le potentiel appliqué aux anodes, par exemple le potentiel de la masse, est supérieur au potentiel appliqué aux cathodes, par exemple un potentiel négatif. Les électrons sont alors collectés par les anodes 34, c'est pourquoi ce sont elles qui sont connectées aux circuits de lecture 22. Les cathodes 32 ont généralement un rôle limité à la polarisation de la plaque 26 et une unique cathode peut être utilisée comme cela est représenté en figure 1.

On utilise généralement plusieurs anodes 34 ayant, par exemple, la forme de plots isolés les uns des autres et disposés selon une matrice, en rangées et en colonnes. Lorsque l'on applique une tension de polarisation entre la cathode 32 et les anodes 34, un champ électrique apparaît dans le matériau semiconducteur. Ce champ électrique entraîne les trous vers la cathode 32 et les électrons vers les anodes 34. Chaque anode 34 coopère avec un volume V de matériau semiconducteur qui est face à elle, et qui est représenté par une zone hachurée sur la figure 1. Chaque volume V correspond à un pixel du dispositif de détection 10.

Lors d'une interaction du matériau semiconducteur avec un rayonnement ionisant incident 14, les charges de type électrons générées dans le volume V de matériau semiconducteur en regard d'une anode 34 sont collectées par cette anode. Ces charges collectées par une anode induisent une impulsion de courant électrique. Le circuit de lecture 22 comprend un préamplificateur de charges 37 fournissant un signal Amp à un circuit de mise en forme 38 qui fournit des signaux H1 et Max1 au module de traitement 24.

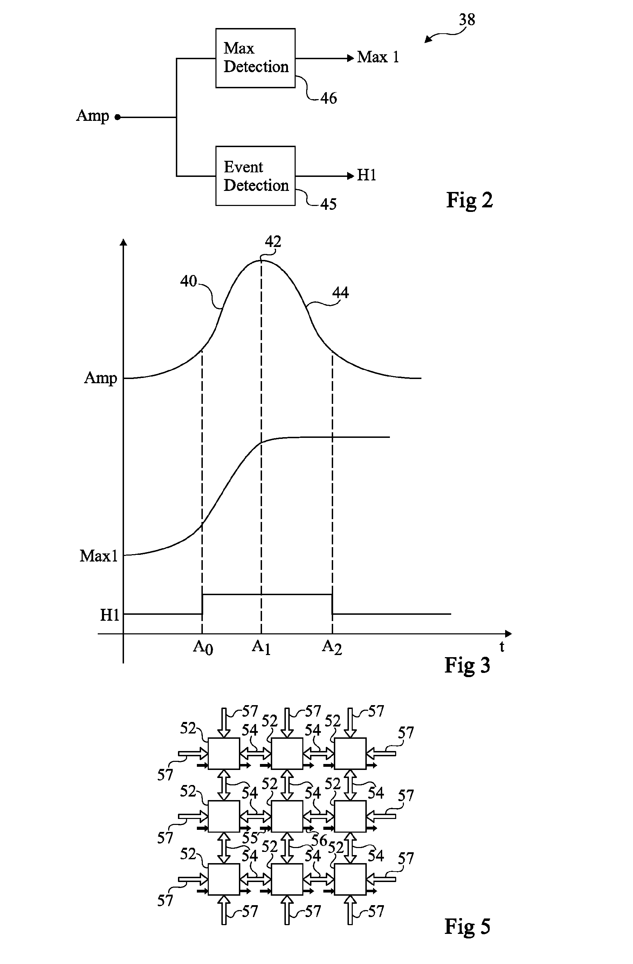

La figure 2 représente un mode de réalisation du circuit de mise en forme 38 et la figure 3 représente des chronogrammes illustrant des exemples d'évolution du signal reçu et des signaux fournis par le circuit de mise en forme 38. Les instants A₀, A₁ et A₂ sont des instants successifs.

Le circuit de mise en forme 38 reçoit le signal analogique Amp fourni par le préamplificateur de charges 37. Le signal Amp est obtenu à partir de l'impulsion de courant lors de la collecte de charges par l'électrode 34 reliée au circuit de lecture 22. Lorsque des charges sont collectées par l'électrode 34, ceci se traduit par une variation du signal Amp qui comprend en général une phase de croissance 40, le passage par un maximum 42 à l'instant A₁ et une phase de décroissance 44.

Le circuit de mise en forme 38 comprend un module de détection d'événements 45 (Event Detection) qui reçoit le signal Amp et qui fournit le signal H1. Le signal H1 est un signal binaire qui est à un premier état, par exemple '0', tant que le signal Amp est inférieur à un seuil et est à un deuxième état, par exemple '1', lorsque le signal Amp est supérieur au seuil. Dans l'exemple illustré en figure 3, le signal binaire H₁ passe de '0' à '1' à l'instant A₀ et de '1' à '0' à l'instant A₂.

Le circuit de mise en forme 38 comprend, en outre, un module de détection de maximum 46 (Max Detection) qui reçoit le signal Amp et qui fournit un signal analogique Max1. Le signal analogique Max1 suit le signal Amp dans la phase de croissance 40 et conserve la valeur maximale du signal Amp après l'instant A₁. Cette valeur maximale est représentative de l'énergie du rayonnement ionisant déposée dans le volume V de matériau semiconducteur en regard de l'anode 34.

Lors de l'utilisation du dispositif 10 de détection de rayonnement ionisant pour faire de l'imagerie, on cherche à obtenir une image de l'objet ou de l'être vivant 18 placé entre la source de rayonnement ionisant 16 et le dispositif de détection 10. Le rayonnement ionisant 14 qui traverse l'objet ou l'être vivant 18 est atténué au moment où il atteint le capteur 20. L'intensité du rayonnement ionisant 14 qui atteint le capteur 20 dépend de la composition chimique et de la densité de l'objet ou de l'être vivant 18 traversé. Le module de traitement 24 peut, à partir des signaux H1 et Max1, fournir une image du contraste en transmission de l'objet ou de l'être vivant 18, ce qui permet d'acquérir des informations sur la structure interne de l'objet ou de l'être vivant 18.

Pour réaliser des images de l'objet ou de l'être vivant 18 observé de qualité correcte, il est nécessaire de disposer d'un grand nombre de pixels et donc d'un grand nombre d'électrodes 34 qui sont chacune connectées à un circuit de lecture 22. Or, on s'aperçoit que les électrodes 34 collectent des signaux parasites qu'il faut rejeter si on veut obtenir la qualité recherchée.

Des signaux parasites peuvent se produire dans le cas d'un partage de charges qui a lieu lorsque les charges formées suite à l'interaction d'un photon avec le matériau semiconducteur sont collectées par deux électrodes 34 associées à deux pixels voisins. On a représenté schématiquement en figure 1 par un cercle 47 en traits pointillés un exemple d'interaction entraînant un partage de charges et par des lignes 48 en traits pointillés le parcours d'électrons jusqu'à deux électrodes 34 adjacentes.

Le module de traitement 24 peut, à partir d'une analyse des signaux H1 et Max1 fournis par chaque circuit de lecture 22, déterminer si des partages de charge se sont produits et, dans l'affirmative, corriger le nombre et le niveau d'énergie des photons détectés. En effet, lorsque des charges sont détectées quasiment simultanément par deux circuits de lecture reliés à des pixels adjacents, ce qui est appelé par la suite une coïncidence de détections, ceci correspond dans l'essentiel des cas à un unique photon ayant interagi avec le matériau semiconducteur et ayant entraîné la formation d'électrons collectés par deux électrodes adjacentes. Toutefois, ceci impose que le module de traitement 24 date de façon précise tous les signaux d'événements H1 fournis par les circuits de lecture 22 de façon à déterminer si des signaux d'événements H1 fournis par des circuits de lecture 22 de pixels adjacents sont simultanés. Lorsque le nombre de pixels est important, cette opération de datation peut être difficile à réaliser à bas coût en temps réel.

Il serait donc souhaitable de pouvoir réaliser l'opération de correction tenant compte des partages de charges directement au niveau des circuits de lecture 22 associés aux pixels. Le module de traitement 24 n'a plus alors à réaliser l'opération de correction pour tenir compte des partages de charges. De façon avantageuse, le module de traitement 24 peut ne plus avoir à dater tous les signaux qui lui sont transmis par les circuits de lecture.

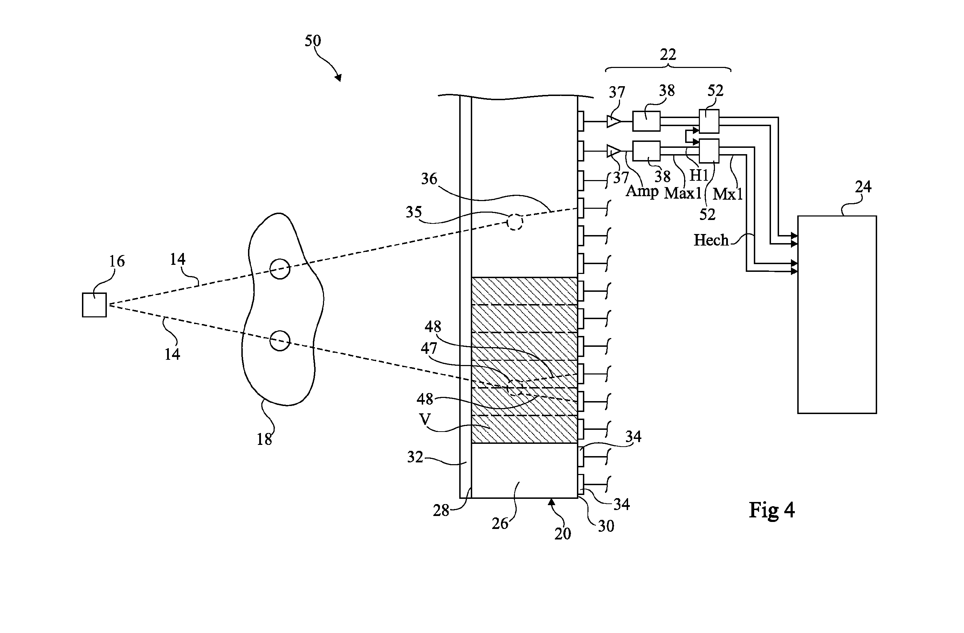

La figure 4 représente un mode de réalisation selon l'invention d'un dispositif 50 de détection de rayonnements ionisants. Le dispositif 50 comprend l'ensemble des éléments du dispositif 10 représenté en figure 1. Toutefois, le circuit de lecture 22 associé à chaque pixel V comprend, en outre, un circuit de correction 52 qui reçoit les signaux H1 et Max1 fournis par le circuit de mise en forme 38 et qui fournit des signaux Mx1 et Hech au module de traitement 24. Le signal Hech est un signal binaire qui est, par exemple, mis à '1' pour indiquer la détection d'un rayonnement ionisant par le circuit de correction. Le signal Hech peut être mis à '1' pendant une durée constante. Le signal Mx1 est un signal analogique représentatif de l'énergie du photon détecté par le pixel relié au circuit de correction. En outre, chaque circuit de correction 52 associé à un pixel donné peut échanger des signaux avec des circuits de correction 52 associés à des pixels adjacents au pixel donné. Le circuit de correction 52 peut, en outre, recevoir et fournir d'autres signaux.

La figure 5 illustre un exemple de connexion entre circuits de correction 52. A titre d'exemple, dans le cas où les électrodes 34 sont réparties de façon matricielle, en rangées et en colonnes, les circuits de correction 52 peuvent être agencés de façon analogue. En figure 5, on a représenté, de façon schématique, une matrice de neuf circuits de correction 52 agencés selon trois rangées et trois colonnes. Bien entendu, en pratique, le nombre de rangées et de colonnes est plus important. A titre d'exemple, le circuit de correction relié à une électrode centrale entourée par huit électrodes peut échanger des signaux avec les circuits de correction reliés aux électrodes situées respectivement au nord, au sud, à l'est et à l'ouest de l'électrode centrale (double flèche 54). Chaque circuit de correction 52 reçoit, en outre, des signaux du circuit de mise en forme 38 (flèche 55) et fournit des signaux au module de traitement 24 (flèche 56). Dans la suite de la description, le circuit de correction relié à l'électrode centrale est appelé circuit de correction central et les circuits de correction reliés à des électrodes situées au nord, au sud, à l'est et à l'ouest de l'électrode centrale sont appelés circuits de correction adjacents.

De préférence, les circuits de correction 52 sont des circuits électroniques identiques. Dans ce but, les circuits de correction 52 reliés à des électrodes 34 en bordure de la matrice d'électrodes reçoivent néanmoins des signaux (flèches 57) mis à un état inactif.

Dans la suite de la description, à des fins de clarté, on ajoute, pour au moins certains signaux reçus et transmis par le circuit de correction central, l'indice k pouvant être égal à N, S, E ou O lorsque le signal est échangé avec le circuit de correction adjacent relié à l'électrode 34 située respectivement au nord, au sud, à l'est et à l'ouest de l'électrode centrale.

Selon un mode de réalisation de l'invention, le circuit de correction 52 central reçoit au moins les signaux Hₖ et Mxₖ de chaque circuit de correction 52 adjacent et fournit les signaux H1ₖ et Mid à chaque circuit de correction 52 adjacent. Le signal H1ₖ est identique au signal H1 reçu par le circuit de correction central. Le signal Hₖ est identique au signal H1 reçu par chaque circuit de correction adjacent. Le signal Mid est un signal analogique qui suit au moins en partie le signal Max1.

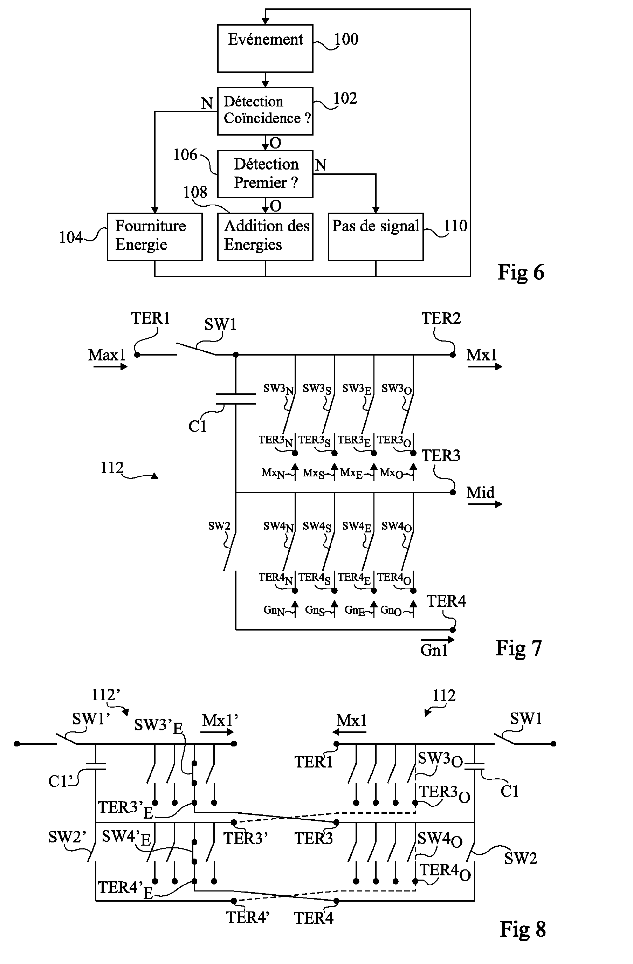

La figure 6 illustre sous la forme d'un schéma-bloc un mode de réalisation d'un procédé de correction mis en oeuvre par le circuit de correction central 52.

A l'étape 100, le circuit de correction central 52 détecte un rayonnement ionisant. Ceci correspond, par exemple, à la réception d'un signal H1 passant à l'état '1'. Le procédé se poursuit à l'étape 102.

A l'étape 102, le circuit de correction central 52 détermine si un rayonnement ionisant a été détecté de façon sensiblement coïncidente par l'un des circuits de correction adjacents en détectant notamment si l'un des signaux Hₖ change d'état. Selon un mode de réalisation de l'invention, le circuit de correction central considère qu'une coïncidence de détections a lieu avec un circuit de correction adjacent si le signal Hₖ change d'état dans un intervalle de temps donné avant ou après le changement d'état du signal H1 reçu par le circuit de correction central.

Selon un mode de réalisation de l'invention, le circuit de correction central ne prend en compte qu'une seule coïncidence de détections, appelée coïncidence de détections prioritaire. Si une seule coïncidence de détections se produit, cette coïncidence de détections est la coïncidence de détections prioritaire. Si deux ou trois coïncidences de détections ont lieu avec des circuits de correction adjacents, le circuit de correction central sélectionne la coïncidence de détections prioritaire et ignore les autres coïncidences de détections.

S'il n'y a pas de coïncidence de détections à l'étape 102, le procédé se poursuit à 104. Si une coïncidence de détections se produit entre deux pixels adjacents, le procédé se poursuit à l'étape 106.

A l'étape 104, le circuit de correction central met le signal Hech à '1' pour indiquer la détection d'un rayonnement ionisant par le pixel central. A titre d'exemple, le front montant du signal Hech se produit après le front descendant du signal H1. Le signal Mx1 fourni au module de traitement 24 pendant que le signal Hech est à l'état '1' est un signal analogique dont la valeur est sensiblement constante et correspond à la valeur maximale du signal Max1. Le procédé se poursuit à l'étape 100.

A l'étape 106, il est déterminé auquel des deux pixels participant à la coïncidence de détections prioritaire doit être attribuée la détection du rayonnement ionisant, c'est-à-dire lequel des deux circuits de correction parmi le circuit de correction central ou le circuit de correction adjacent va transmettre les signaux Hech et Mx1 au module de traitement 24. S'il est déterminé que la détection du rayonnement ionisant est attribuée au pixel central, le procédé se poursuit à l'étape 108. S'il est déterminé que la détection du rayonnement ionisant est attribuée au pixel adjacent, le procédé se poursuit à l'étape 110. Selon un mode de réalisation de l'invention, la détection du rayonnement ionisant est attribuée au circuit de correction pour lequel le signal H1 passe le premier à l'état '1'.

A l'étape 108, le circuit de correction central envoie une requête au circuit de correction adjacent participant à la coïncidence de détections prioritaire pour obtenir la valeur représentative de l'énergie du photon détectée par le circuit de correction adjacent. Si la requête est acceptée, le circuit de correction adjacent transmet cette valeur d'énergie par le signal Mxₖ. En outre, le circuit de correction met le signal Hech à '1' pour indiquer la détection d'un rayonnement ionisant par le pixel central. A titre d'exemple, le front montant du signal Hech se produit après le front descendant se produisant le plus tard parmi le signal Hₖ et le signal H1 reçus par le circuit de correction central.

Si la requête a été acceptée, le signal Mx1 fourni par le circuit de correction central 52 au module de traitement 24 pendant que le signal Hech est à l'état '1' est un signal analogique dont la valeur est sensiblement constante et correspond à la somme des valeurs maximales des signaux Max1 reçus par les circuits de correction central et adjacent. Si la requête a été refusée, le signal Mx1 fourni par le module de correction central au module de traitement 24 pendant que le signal Hech est à l'état '1' est un signal analogique dont la valeur est sensiblement constante et correspond à la valeur maximale du signal Max1 reçu seulement par le circuit de correction central. Le procédé se poursuit à l'étape 100.

A l'étape 110, le circuit de correction central transmet au circuit de correction adjacent participant à la coïncidence de détections prioritaire, via le signal Mid, une valeur représentative de l'énergie du photon qu'il a détecté. En outre, le circuit de correction central maintient le signal Hech à '0'. Le module de traitement 24 considère donc qu'il n'y a pas eu de détection de rayonnement ionisant par le pixel central. Le procédé se poursuit à l'étape 100.

Selon le mode de réalisation décrit précédemment en relation avec la figure 6, les signaux représentatifs de niveaux d'énergie Max1, Mx1, Mid et Mxₖ sont des signaux analogiques. Selon un autre mode de réalisation, les signaux échangés entre les circuits de correction et représentatifs de niveaux d'énergie peuvent être des signaux numériques. Selon un exemple, le signal analogique Amp fourni par le préamplificateur de charges 37 est converti en un signal numérique AmpNUM et tous les signaux Max1, Mx1, Mid et Mxₖ représentatifs de niveaux d'énergie sont obtenus à partir du signal AmpNUM. Selon un autre exemple, les signaux analogiques Max1, Mx1, Mid et Mxₖ ou certains d'entre eux peuvent être déterminés à partir du signal Amp et être convertis en signaux numériques lorsqu'ils doivent être échangés entre circuits de correction.

Selon le mode de réalisation décrit précédemment en relation avec la figure 6, le circuit de correction central ne prend en compte qu'une seule coïncidence de détections prioritaire parmi toutes les coïncidences de détections. Selon un autre mode de réalisation, à l'étape 102, le circuit de correction central peut prendre en compte plusieurs coïncidences de détections, voire la totalité des coïncidences de détections, appelées coïncidences de détections prioritaires, parmi toutes les coïncidences de détections. Dans ce cas, à l'étape 106, il peut être déterminé auquel des pixels participant aux coïncidences de détections prioritaires doit être attribuée la détection du rayonnement ionisant, c'est-à-dire lequel des circuits de correction parmi le circuit de correction central ou les circuits de correction adjacents participant aux coïncidences de détections prioritaires va transmettre les signaux Hech et Mx1 au module de traitement 24. S'il est déterminé que la détection du rayonnement ionisant est attribuée au pixel central, le circuit de correction central peut envoyer, à l'étape 108, une requête à chaque circuit de correction adjacent participant aux coïncidences de détections prioritaires pour obtenir la valeur représentative de l'énergie du photon détectée par ce circuit de correction adjacent. Chaque circuit de correction adjacent acceptant la requête peut transmettre cette valeur d'énergie par le signal Mxₖ. S'il est déterminé que la détection du rayonnement ionisant est attribuée à l'un des pixels adjacents, le circuit de correction central peut transmettre, à l'étape 110, au circuit de correction adjacent, auquel est attribuée la détection du rayonnement ionisant, une valeur représentative de l'énergie du photon qu'il a détecté et le circuit de correction central maintient le signal Hech à '0'.

Selon un mode de réalisation de l'invention, le circuit de correction central reçoit, en outre, un signal Gnₖ de chaque circuit de correction adjacent et fournit un signal Gn1 à chaque circuit de correction adjacent. Les signaux Gnₖ et Gn1 sont des potentiels de référence ou masses locales.

Le fait que la mise à '1' du signal Hech ne soit réalisée que par un seul circuit, le circuit de correction central ou le circuit de correction adjacent, dans le cas d'une coïncidence de détections de charges par deux électrodes contigües permet d'améliorer la prise en compte des coïncidences de détections par le module de traitement 24. Le fait, en outre, que le circuit mettant à '1' le signal Hech fournisse également un signal Mx1 représentatif de la somme des énergies détectées par deux électrodes contigües permet encore davantage d'améliorer la prise en compte des coïncidences de détections par le module de traitement 24.

La figure 7 représente un mode de réalisation d'une partie du circuit de correction 52 correspondant à un circuit 112 de fourniture des signaux Mx1 et Mid pouvant être utilisé pour réaliser les étapes 104, 108 ou 110 du mode de réalisation du procédé de correction décrit précédemment en relation avec la figure 6.

Le circuit 112 comprend une borne TER1 recevant le signal Max1. Un interrupteur SW1 est prévu entre la borne d'entrée TER1 et une borne TER2 fournissant le signal Mx1. Un condensateur C1 est disposé entre la borne TER1 et une borne TER3 fournissant le signal Mid. Un interrupteur SW2 est disposé entre la borne TER3 et une borne TER4 fournissant le signal Gn1. La capacité du condensateur C1 est, par exemple, de l'ordre de 1 pF.

Des interrupteurs SW3_{N}, SW3_{S}, SW3_{E}, SW3_{O} relient la borne TER2 respectivement à des bornes TER3_{N}, TER3_{S}, TER3_{E} et TER3_{O} qui reçoivent respectivement les signaux Mx_{N}, Mx_{S}, Mx_{E} et Mx_{O}. Des interrupteurs SW4_{N}, SW4_{S}, SW4_{E}, SW4_{O} relient la borne TER3 respectivement à des bornes TER4_{N}, TER4_{S}, TER4_{E} et TER4_{O} qui reçoivent respectivement les signaux Gn_{N}, Gn_{S}, Gn_{E} et Gn_{O}.

Chaque borne TER3ₖ, où k est égal à N, S, E ou O, du circuit de correction central est reliée en permanence à la borne TER3 du circuit de correction adjacent considéré et la borne TER3 du circuit de correction central est reliée en permanence aux bornes TER3_{N}, TER3_{S}, TER3_{E} et TER3_{O} des circuits de correction adjacents. Chaque borne TER4ₖ, où k est égal à N, S, E ou O, du circuit de correction central est reliée en permanence à la borne TER4 du circuit de correction adjacent considéré et la borne TER4 du circuit de correction central est reliée en permanence aux bornes TER4_{N}, TER4_{S}, TER4_{E} et TER4_{O} des circuits de correction adjacents.

En fonctionnement, lorsque les interrupteurs SW1 et SW2 sont fermés, la tension Max1 est appliquée aux bornes du condensateur C1 et le signal Mx1 suit le signal Max1. Lorsque l'interrupteur SW1 est ouvert, le signal Max1 est échantillonné et la tension échantillonnée est maintenue aux bornes du condensateur C1. Lorsque l'échantillonnage est réalisé au maximum de la tension Max1, la tension aux bornes du condensateur C1 est représentative de l'énergie du photon détecté par le circuit de correction central.

La figure 8 illustre deux exemples de configurations des interrupteurs du circuit 112 pouvant être utilisées aux étapes 108 et 110 décrites précédemment lorsque le circuit de correction central et le circuit de correction adjacent situé à l'est participent à la coïncidence de détections. Le symbole' est ajouté aux références des éléments du circuit de correction à l'est pour les distinguer du circuit de correction central.

Pour que le circuit de correction central fournisse un signal Mx1 égal à la somme des tensions aux bornes des condensateurs C1 et C1' (ligne en traits pleins), l'interrupteur SW3_{E}' est fermé et l'interrupteur SW4_{E}' est fermé, les autres interrupteurs restant ouverts. Pour que le circuit de correction adjacent à l'est du circuit de correction central fournisse un signal Mx1' égal à la somme des tensions aux bornes des condensateurs C1 et C1' (ligne en traits pointillés), l'interrupteur SW3_{O} est fermé et l'interrupteur SW4_{E} est fermé, les autres interrupteurs restant ouverts.

Selon un mode de réalisation de l'invention, le circuit de correction central reçoit, en outre, un signal Mₖ de chaque circuit de correction adjacent et fournit un signal M1ₖ à chaque circuit de correction adjacent. Les signaux Mₖ et M1ₖ sont des signaux binaires.

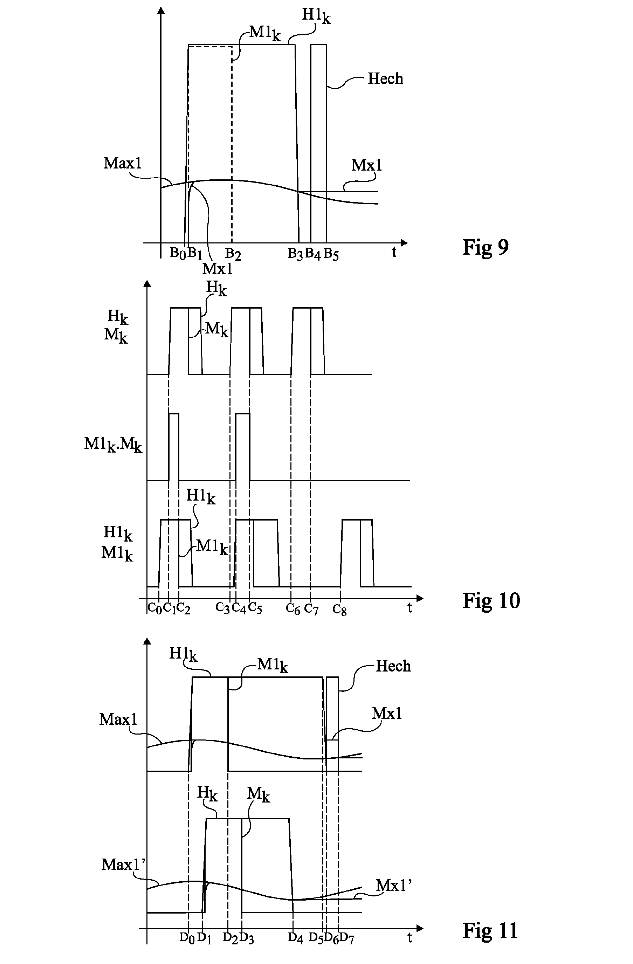

La figure 9 représente des chronogrammes des signaux H1ₖ (ou H1), Hech, M1ₖ, Max1 et Mx1 fournis par le circuit de correction central en l'absence de coïncidence, où k est égal à N, S, E ou O. Les instants B₀ à B₅ sont des instants successifs.

Le signal H1ₖ est un signal binaire qui débute sur son front avant à l'instant B₀ et se termine sur son front arrière à l'instant B₃. Dans l'exemple représenté en figure 9, le front avant du signal H1ₖ est un front montant et le front arrière du signal H1ₖ est un front descendant.

Le circuit de correction 52 fournit à chaque circuit de correction adjacent un signal M1ₖ, où k peut être égal à N, S, E ou O. Le signal M1ₖ est un signal binaire dont le front avant se produit à l'instant B₁ qui suit immédiatement l'instant B₀. Dans la suite de la description, on considère que le front avant du signal M1ₖ coïncide sensiblement avec le front avant du signal H1ₖ. Le signal M1ₖ se termine sur son front arrière à l'instant B₂. La durée entre les instants B₀ et B₂ est constante, par exemple de l'ordre de 8 ns.

Le signal Max1 est représenté en figure 9 sous forme sinusoïdale pour mieux distinguer les différentes phases. L'interrupteur SW1 est fermé à l'instant B₀ et ouvert à l'instant B₃. Le signal Mx1 suit donc le signal Max1 entre les instants B₀ et B₃ puis se maintient à la valeur échantillonnée de Max1 à l'instant B₃.

Le signal Hech est un signal binaire qui débute sur son front avant à l'instant B₄ et se termine sur son front arrière à l'instant B₅. En l'absence de coïncidence, le front montant du signal Hech peut suivre immédiatement le front descendant du signal H1ₖ. Dans ce cas, les instants B₃ et B₄ sont quasiment confondus.

La figure 10 illustre plus en détail un mode de réalisation des étapes 102 et 106 du mode de réalisation du procédé de correction décrit précédemment en relation avec la figure 6.

Les instants C₀ à C₈ sont des instants successifs. En partie basse de la figure 10 sont représentés les signaux H1ₖ et M1ₖ, k étant égal à N, S, E ou O, fournis par le circuit de correction central aux circuits de correction adjacents et en partie haute de la figure 10 sont représentés les signaux Hₖ et Mₖ fournis par l'un des circuits de correction adjacents au circuit de correction central. Pour déterminer si une coïncidence de détections a lieu, le circuit de correction central détermine le produit des signaux M1ₖ et Mₖ représenté en partie centrale de la figure 10. La figure 10 illustre trois cas.

Le premier cas (instants C₀ à C₂) correspond à une coïncidence de détections, la détection de rayonnement ionisant ayant lieu en premier dans le pixel central. Les fronts avant des signaux H1ₖ et M1ₖ se produisent à l'instant C₀. Les fronts avant des signaux Hₖ et Mₖ se produisent à l'instant C₁ qui précède l'instant C₂ où se produit le front arrière du signal M1ₖ. Le circuit de correction central détermine qu'une coïncidence de détections a lieu à partir du fait que le produit entre les signaux Mₖ et M1ₖ n'est pas nul entre les instants C₁ et C₂. Le circuit de correction central détermine que la détection de rayonnement ionisant a lieu en premier dans le pixel central à partir du fait que le front montant du signal M1ₖ se produit avant le front montant du signal Mₖ.

Le deuxième cas (instants C₃ à C₅) correspond à la présence d'une coïncidence de détections, la détection de rayonnement ionisant ayant eu lieu en premier dans le pixel adjacent. Les fronts avant des signaux Hₖ et Mₖ se produisent à l'instant C₃. Les fronts avant des signaux H1ₖ et M1ₖ se produisent à l'instant C₄ qui précède l'instant C₅ où se produit le front arrière du signal Mₖ. Le circuit de correction central détermine qu'une coïncidence de détections a lieu à partir du fait que le produit entre les signaux Mₖ et M1ₖ n'est pas nul entre les instants C₄ et C₅. Le circuit de correction central détermine que la détection de rayonnement ionisant a lieu en premier dans le pixel adjacent à partir du fait que le front montant du signal Hₖ se produit avant le front montant du signal H1ₖ.

Le troisième cas (instants C₆ à C₈) correspond à l'absence de coïncidence de détections. Les fronts avant des signaux Hₖ et Mₖ se produisent à l'instant C₆. Le front arrière du signal Mₖ se produit à l'instant C₇ qui précède l'instant C₈ où se produisent les fronts avant des signaux H1ₖ et M1ₖ. Le circuit de correction central détermine qu'une coïncidence de détections n'a pas lieu à partir du fait que le produit entre les signaux Mₖ et M1ₖ est nul.

Selon un mode de réalisation de l'invention, le circuit de correction central ne prend en compte qu'une seule coïncidence de détections, appelée coïncidence de détections prioritaire. Selon un mode de réalisation de l'invention, si deux ou plus de deux coïncidences de détections ont lieu dont au moins une pour laquelle le signal Hₖ passe à l'état '1' après le passage à l'état '1' du signal H1, la coïncidence de détections prioritaire est la coïncidence de détections avec le circuit de correction adjacent pour laquelle le signal Hₖ passe le premier à l'état '1' après le passage à l'état '1' du signal H1. Selon un mode de réalisation de l'invention, si pour toutes les coïncidences de détections, le signal Hₖ passe à l'état '1' avant le passage à l'état '1' du signal H1, la coïncidence de détections prioritaire est la coïncidence de détections avec le circuit de correction adjacent pour laquelle le signal Hₖ passe le premier à l'état '1' avant le passage à l'état '1' du signal H1.

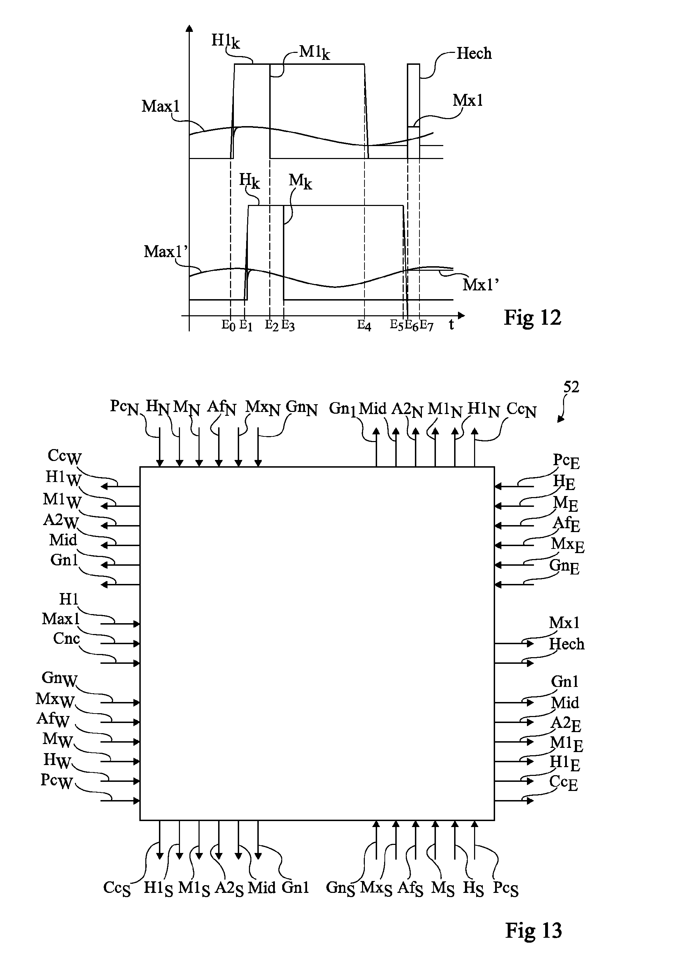

Les figures 11 et 12 illustrent un mode de réalisation plus détaillé des étapes 102, 106 et 108 du procédé décrit précédemment en relation avec la figure 6, chaque circuit de correction 52 comprenant le circuit 112 décrit précédemment en relation avec les figures 7 et 8.

Les figures 11 et 12 représentent chacune, en partie haute, des chronogrammes de signaux reçus et fournis par le circuit de correction central et, en partie basse, des chronogrammes de signaux reçus et fournis par un circuit de correction adjacent dans le cas d'une coïncidence de détections. Le signal Max1' correspond au signal Max1 reçu par le circuit de correction adjacent et le signal Mx1' correspond au signal Mx1 fourni par le circuit de correction adjacent. Les instants D₀ à D₇ et les instants E₀ à E₇ sont des instants successifs.

La figure 11 illustre un exemple de coïncidence de détections (supposée prioritaire) dans laquelle le front arrière du signal Hₖ précède le front arrière du signal H1ₖ.

Les fronts avant des signaux H1ₖ et M1ₖ se produisent à l'instant D₀. Les fronts avant des signaux Hₖ et Mₖ se produisent à l'instant D₁ qui précède l'instant D₂ où se produit le front arrière du signal M1ₖ. Le circuit de correction central détermine donc qu'une coïncidence de détections a lieu à partir du fait que le produit entre les signaux Mₖ et M1ₖ n'est pas nul entre les instants D₁ et D₂. En outre, le circuit de correction central détermine que la détection de rayonnement ionisant a lieu en premier dans le pixel central à partir du fait que le front montant du signal M1ₖ se produit avant le front montant du signal Mₖ. A l'instant D₃ se produit le front arrière du signal Mₖ et à l'instant D₄ se produit le front arrière du signal Hₖ. L'interrupteur SW1 du circuit de correction adjacent est fermé à l'instant D₁ et ouvert à l'instant D₄. Après l'instant D₄, le signal Mx1' est sensiblement constant et correspond à la valeur échantillonnée du signal Max1' à l'instant D₄. A l'instant D₅ se produit le front arrière du signal H1ₖ. L'interrupteur SW1 du circuit de correction central est fermé à l'instant D₀ et ouvert à l'instant D₅.

Après l'instant D₅, les signaux H1ₖ et Hₖ étant au niveau bas, le circuit de correction central met le signal Hech à l'état haut à l'instant D₆ immédiatement après le front arrière du signal H1ₖ. Le front arrière du signal Hech a lieu à l'instant D₇. Les interrupteurs SW3ₖ et SW4ₖ du circuit de correction adjacent sont fermés entre les instants D₆ et D₇. Entre les instants D₆ et D₇, le signal Mx1 correspond à la valeur échantillonnée du signal Max1 à l'instant D₅ augmentée du signal Mx1' qui correspond à la valeur échantillonnée du signal Max1' à l'instant D₄. Le circuit de correction adjacent ne fournit pas de signal Hech de sorte que seule la détection d'un rayonnement ionisant par le circuit de correction central est prise en compte par le module de traitement central 24.

La figure 12 illustre un exemple de coïncidence de détections (supposée prioritaire) dans laquelle le front arrière du signal H1ₖ précède le front arrière du signal Hₖ. Les signaux évoluent de la même façon entre les instants E₀ et E₃ qu'entre les instants D₀ et D₃. A l'instant E₄ se produit le front arrière du signal H1ₖ. L'interrupteur SW1 du circuit de correction central est fermé à l'instant E₀ et ouvert à l'instant E₄. A l'instant E₅ se produit le front arrière du signal Hₖ. L'interrupteur SW1 du circuit de correction adjacent est fermé à l'instant E₁ et ouvert à l'instant E₅. Après l'instant E₅, le signal Mx1' est sensiblement constant et correspond à la valeur échantillonnée du signal Max1' à l'instant E₅.

Après l'instant E₅, les signaux H1ₖ et Hₖ étant au niveau bas, le circuit de correction central met le signal Hech à l'état haut à l'instant E₆ immédiatement après le front arrière du signal Hₖ. Le front arrière du signal Hech a lieu à l'instant E₇. Les interrupteurs SW3ₖ et SW4ₖ du circuit de correction adjacent sont fermés entre les instants E₆ et E₇. Entre les instants E₆ et E₇, le signal Mx1 correspond à la valeur échantillonnée du signal Max1 à l'instant E₄ augmentée du signal Mx1' qui correspond à la valeur échantillonnée du signal Max1' à l'instant E₅. Le circuit de correction adjacent ne fournit pas de signal Hech de sorte que seule la détection d'un rayonnement ionisant par le circuit de correction central est prise en compte par le module de traitement central 24.

La figure 13 représente, de façon schématique, les signaux reçus et fournis selon un mode de réalisation du circuit de correction 52 dans lequel le circuit de correction reçoit, en outre, un signal Cnc du module de traitement 24 et des signaux Pcₖ et Afₖ de chaque circuit de correction adjacent et fournit des signaux Ccₖ et A2ₖ à chaque circuit de correction adjacent.

Le signal Cnc est un signal binaire qui correspond à un bit de contrôle de chaque circuit de correction 52. A titre d'exemple, lorsque le signal Cnc est à l'état haut, un procédé de correction est mis en oeuvre pour tenir compte des phénomènes de partages de charges selon l'un des modes de réalisation de l'invention décrits précédemment. A titre d'exemple, lorsque le signal Cnc est à l'état bas, aucun procédé de correction n'est mis en oeuvre pour tenir compte des phénomènes de partages de charges.

Les signaux Afₖ, Pcₖ, A2ₖ et Ccₖ sont utilisés pour la mise en oeuvre d'un protocole de communication entre le circuit de correction central et les circuits de correction adjacents aux étapes 102, 106, 108 et 110 décrites précédemment en relation avec la figure 6.

Lorsqu'aux étapes 102 et 106, le circuit de correction central détermine qu'une coïncidence de détections prioritaire a lieu avec l'un des circuits adjacents, par exemple le circuit adjacent à l'est, et que le circuit de correction central est le premier à avoir détecté le rayonnement ionisant, il met le signal Cc_{E} à '1', les autres signaux Cc_{N}, Cc_{S} et Cc_{O} étant maintenus à '0'. La mise à '1' du signal Cc_{E} peut être effectuée au front descendant du signal M1_{E}. S'il est disponible, le circuit de correction adjacent à l'est met le signal Pc_{E} à '1', par exemple au front arrière du signal M_{E}. Le circuit de correction adjacent à l'est ferme alors les interrupteurs SW3_{E} et SW4_{E} et le circuit de correction central attend le front arrière parmi le front arrière du signal H1_{E} et H_{E} qui est le plus tardif pour mettre le signal Hech à '1' et réaliser l'addition des signaux Mx1 et Mx_{E} (étape 108). S'il n'est pas disponible, le circuit de correction adjacent à l'est maintient le signal Pc_{E} à '0' et maintient ouverts les interrupteurs SW3_{E} et SW4_{E}. Tout se passe comme s'il n'y avait pas de coïncidence de détections (étape 104) et le circuit de correction central met alors le signal Hech à '1' après le front arrière du signal H1_{E} et H_{E}. Il n'y a donc pas addition des signaux Mx1 et Mx_{E} pendant que le signal Hech est à '1'. Le circuit de correction adjacent peut ne pas être disponible s'il participe déjà à une coïncidence de détections prioritaire avec un autre circuit de correction.

L'un des circuits de correction adjacents, par exemple le circuit de correction adjacent situé à l'est, peut déterminer qu'une coïncidence de détections prioritaire a lieu avec le circuit de correction central et que le circuit de correction adjacent est le premier à avoir détecté le rayonnement ionisant. Le circuit de correction adjacent peut alors transmettre au circuit de correction central une requête pour récupérer le signal Mx1 du circuit de correction central. Le circuit de correction adjacent, par exemple situé à l'est, met alors le signal Af_{E} à '1', les autres signaux Af_{N}, Af_{S} et Af_{O} étant maintenus à '0'. La mise à '1' du signal Af_{E} peut être effectuée au front descendant du signal M_{E}. Si aux étapes 102 et 106, le circuit de correction central a également déterminé qu'une coïncidence de détections a lieu avec le circuit adjacent à l'est, le circuit de correction central met le signal A2_{E} à '1', par exemple au front arrière du signal M1_{E}. Le circuit de correction central ferme alors les interrupteurs SW3_{E} et SW4_{E} de sorte que le circuit de correction adjacent à l'est puisse lire la tension aux bornes du condensateur C1 du circuit de correction central via le signal Mid. Si le circuit de correction central n'est pas disponible, le circuit de correction central maintient le signal A2_{E} à '0' et maintient ouverts les interrupteurs SW3_{E} et SW4_{E}. Le circuit de correction central peut ne pas être disponible s'il participe déjà à une coïncidence de détections prioritaire avec un autre circuit de correction.

Des modes de réalisation particuliers de la présente invention ont été décrits. Diverses variantes et modifications apparaîtront à l'homme de l'art. En particulier, bien que des modes de réalisation aient été décrits dans lesquels chaque circuit de correction central échange des signaux avec quatre autres circuits de correction adjacents (à l'exception des circuits de correction associés à des électrodes aux bords de la matrice d'électrodes), il est clair que chaque circuit de correction central peut être relié à un nombre plus important ou moins important de circuits de correction adjacents. A titre d'exemple, en relation avec la figure 5, le circuit de correction central peut être relié à huit circuits de correction adjacents associés aux électrodes situées au nord, au sud, à l'est, à l'ouest, au nord-est, au nord-ouest, au sud-est et au sud-ouest de l'électrode centrale.

## Revendications

1. Dispositif (50) de détection d'un rayonnement ionisant (14) comportant un capteur (20) dans lequel le rayonnement ionisant entraîne la formation de charges, le capteur comportant une plaque (26) d'un matériau semiconducteur, une première face de ladite plaque étant recouverte d'une ou plusieurs électrodes (32) dénommées cathodes, l'autre face étant recouverte de plusieurs électrodes (34) dénommées anodes reliées chacune à un circuit électronique de correction (52) adapté à fournir, à un module de traitement (24), un premier signal (Hech) indiquant que des charges sont collectées par l'électrode reliée audit circuit électronique de correction ; au moins une électrode (34), appelée électrode centrale, étant entourée d'au moins deux électrodes, appelées électrodes adjacentes, le circuit de correction relié à l'électrode centrale, appelé circuit de correction central, étant adapté à échanger des signaux avec chacun des circuits de correction reliés aux électrodes adjacentes, appelés circuits de correction adjacents ;
**caractérisé**
**en ce que** chaque circuit de correction central ou adjacent est adapté à envoyer respectivement au circuit de correction adjacent ou central un deuxième signal de détection (M1ₖ, Mₖ ; H1ₖ, Hk) lorsque des charges sont collectées respectivement sur l'électrode centrale ou une électrode adjacente ;
**en ce que** chaque circuit de correction central ou adjacent est adapté à envoyer respectivement au circuit de correction adjacent ou central une requête de participation à une coïncidence de détections (Afₖ ; Ccₖ) et recevoir respectivement du circuit de correction adjacent ou central une indication de disponibilité (Pcₖ, A2ₖ) ;
et **en ce que** chaque circuit de correction central comprend un dispositif d'analyse et de commande adapté, lorsque l'électrode centrale a collecté des charges, à :
(a) déterminer, dans une plage temporelle, une éventuelle coïncidence de détections entre l'électrode centrale et au moins l'une des électrodes adjacentes à partir des signaux de détection ;
(b) dans le cas d'une coïncidence de détections, déterminer une première coïncidence de détections prioritaire avec un circuit de correction adjacent, dit prioritaire, pour lequel la probabilité que les deuxièmes signaux de détection du circuit de correction adjacent prioritaire et du circuit de correction central correspondent à un même photon reçu est la plus grande ;
(c) émettre ou recevoir vers le/du circuit de correction adjacent prioritaire une requête de participation à une coïncidence de détections et recevoir ou émettre du/vers le circuit de correction adjacent prioritaire une indication de disponibilité ; et
(d) émettre ledit premier signal (Hech) à destination du module de traitement excepté dans le cas où une coïncidence de détections a été déterminée dans ladite plage temporelle et qu'une indication de disponibilité a été envoyée au circuit de correction adjacent prioritaire.

2. Dispositif selon la revendication 1, dans lequel chaque circuit de correction (52) est adapté à transmettre au module de traitement (24) un troisième signal (Mx1) représentatif de l'énergie du rayonnement ionisant ayant entraîné la formation des charges collectées par l'électrode (34) reliée audit circuit de correction, dans lequel le dispositif d'analyse et de commande de chaque circuit de correction central est adapté à fournir au module de traitement, si ledit circuit de correction adjacent prioritaire accepte la requête de participation, le troisième signal du circuit de correction central augmenté du troisième signal du circuit de correction adjacent prioritaire.

3. Dispositif selon la revendication 2, dans lequel le dispositif d'analyse et de commande de chaque circuit de correction central est adapté à transmettre au circuit de correction adjacent prioritaire le troisième signal (Mx1) du circuit de correction central lorsqu'une indication de disponibilité a été envoyée au circuit de correction adjacent prioritaire.

4. Dispositif selon l'une quelconque des revendications 1 à 3, dans lequel au moins certaines électrodes centrales (34) sont chacune entourées d'au moins quatre électrodes adjacentes.

5. Dispositif selon l'une quelconque des revendications 1 à 4, dans lequel chaque circuit électronique de correction (52) est adapté à fournir un quatrième signal analogique (Amp) qui passe par un extremum lorsque des charges sont collectées par l'électrode (34) reliée audit circuit électronique de correction, le deuxième signal (H1ₖ) étant différent du premier signal (Hech) et étant un signal binaire qui change d'état lorsque le quatrième signal est supérieur, en valeur absolue, à un seuil.

6. Dispositif selon la revendication 5, dans lequel chaque circuit électronique de correction (52) est adapté à fournir le premier signal (Hech) dont le front avant du premier signal est postérieur au front arrière du deuxième signal (H1ₖ).

7. Dispositif selon les revendications 4 et 5, dans lequel le dispositif d'analyse et de commande de chaque circuit de correction central est adapté à déterminer le circuit de correction adjacent prioritaire qui est celui parmi les circuits de correction adjacents reliés à des électrodes adjacentes (34) ayant collecté des charges dans ladite plage temporelle, fournissant le deuxième signal (H1ₖ) dont le front avant suit au plus près le front avant du deuxième signal fourni par le circuit de correction central.

8. Dispositif selon l'une quelconque des revendications 1 à 7, dans lequel chaque circuit électronique de correction (52) est adapté à fournir un cinquième signal (M1ₖ, Mₖ) binaire de durée constante, différent du premier signal (Hech) et du deuxième signal (H1ₖ), indiquant que des charges sont collectées par l'électrode (34) reliée audit circuit électronique de correction, chaque circuit de correction central étant adapté à transmettre, à chaque circuit de correction adjacent, le cinquième signal fourni par le circuit de correction central et à recevoir, de chaque circuit de correction adjacent, le cinquième signal fourni par chaque circuit de correction adjacent.

9. Dispositif selon la revendication 8, dans lequel le circuit de correction central est adapté à déterminer si le produit logique du cinquième signal fourni par le circuit de correction central avec le cinquième signal fourni par chaque circuit de correction adjacent change de valeur.

10. Dispositif selon les revendications 6 et 9, dans lequel chaque circuit électronique de correction (52) est adapté à fournir le cinquième signal (M1ₖ, Mₖ) dont le front avant coïncide avec le front avant du deuxième signal (H1ₖ).

11. Dispositif selon l'une quelconque des revendications 1 à 10, dans lequel les circuits électroniques de correction (52) sont identiques.

12. Dispositif selon l'une quelconque des revendications 1 à 11, dans lequel le dispositif d'analyse et de commande de chaque circuit de correction central est adapté, lorsque l'électrode centrale a collecté des charges, à déterminer au moins deux circuits de correction adjacents prioritaires.

13. Procédé de détection d'un rayonnement ionisant (14) dans lequel le rayonnement ionisant entraîne la formation de charges dans un capteur (20), le capteur comportant une plaque (26) d'un matériau semiconducteur, une première face de ladite plaque étant recouverte d'une ou plusieurs électrodes (32) dénommées cathodes, l'autre face étant recouverte de plusieurs électrodes (34) dénommées anodes reliées chacune à un circuit électronique de correction (52) adapté à fournir, à un module de traitement (24), un premier signal (Hech) indiquant que des charges sont collectées par l'électrode (34) reliée audit circuit électronique de correction, chaque circuit électronique de correction comprenant un dispositif d'analyse et de commande ; au moins une électrode (34), appelée électrode centrale, étant entourée d'au moins deux électrodes, appelées électrodes adjacentes, le circuit de correction relié à l'électrode centrale, appelé circuit de correction central, étant adapté à échanger des signaux avec chacun des circuits de correction reliés aux électrodes adjacentes, appelés circuits de correction adjacents ;
**caractérisé**
**en ce que** chaque circuit de correction central ou adjacent est adapté à envoyer respectivement au circuit de correction adjacent ou central un deuxième signal de détection (M1ₖ, Mₖ ; H1ₖ, Hk) lorsque des charges sont collectées respectivement sur l'électrode centrale ou une électrode adjacente ;
**en ce que** chaque circuit de correction central ou adjacent est adapté à envoyer respectivement au circuit de correction adjacent ou central une requête de participation à une coïncidence de détection (Afₖ ; Ccₖ) et recevoir respectivement du circuit de correction adjacent ou central une indication de disponibilité (Pcₖ, A2ₖ) ;
et **en ce que** le procédé comprend, pour le dispositif d'analyse et de commande de chaque circuit de correction central, lorsque l'électrode centrale a collecté des charges, les étapes suivantes :
(a) déterminer, dans une plage temporelle, une éventuelle coïncidence de détection entre l'électrode centrale et au moins l'une des électrodes adjacentes à partir des signaux de détection ;
(b) dans le cas d'une coïncidence de détections, déterminer une première coïncidence de détection prioritaire avec un circuit de correction adjacent, dit prioritaire, pour lequel la probabilité que les deuxièmes signaux de détection du circuit de correction adjacent prioritaire et du circuit de correction central correspondent à un même photon reçu est la plus grande ;
(c) émettre ou recevoir vers le/du circuit de correction adjacent prioritaire une requête de participation à une coïncidence de détection et recevoir ou émettre du/vers le circuit de correction adjacent prioritaire une indication de disponibilité ; et
(d) émettre ledit premier signal (Hech) à destination du module de traitement excepté dans le cas où une coïncidence de détections a été déterminée dans ladite plage temporelle et qu'une indication de disponibilité a été envoyée au circuit de correction adjacent prioritaire.

## Patentansprüche

1. Eine Vorrichtung (50) zum Detektieren einer ionisierenden Strahlung (14), wobei die Vorrichtung einen Sensor (20) aufweist und wobei die ionisierende Strahlung das Ausbilden von Ladungen verursacht, wobei der Sensor einen Wafer (26) aus einem Halbleitermaterial aufweist, wobei eine erste Seite dieses Wafers durch eine oder mehr als eine Elektrode (32), die Kathoden genannt werden, abgedeckt ist, wobei die andere Seite durch mehrere Elektroden (34), die Anoden genannt werden, abgedeckt ist, wobei jede mit einem elektronischen Korrekturschaltkreis (52) verbunden ist, der geeignet ist eine Verarbeitungseinheit (24) mit einem ersten Signal (Hech) zu versorgen, das anzeigt, dass Ladungen durch die Elektrode, die mit dem elektrischen Korrekturschaltkreis verbunden ist, gesammelt werden;
wenigstens eine Elektrode (34), die Zentralelektrode genannt wird, wobei die Elektrode von wenigstens zwei Elektroden umgeben ist, die benachbarte Elektroden genannt werden, wobei der Korrekturschaltkreis, der mit der Zentralelektrode verbunden ist und der zentraler Korrekturschaltkreis genannt wird, geeignet ist Signale mit jedem der Korrekturschaltkreise auszutauschen, die mit den benachbarten Elektroden verbunden sind und die benachbarte Korrekturschaltkreise genannt werden;
**dadurch gekennzeichnet, dass** jeder zentrale oder benachbarte Korrekturschaltkreis geeignet ist entsprechende an den benachbarten oder den zentralen Korrekturschaltkreis ein zweites Detektionssignal (M1 k, Mk; H1 k, Hk) zu senden, wenn Ladungen entsprechend auf der zentralen Elektrode oder einer benachbarten Elektrode gesammelt werden;
dadurch, dass jeder zentrale oder benachbarte Korrekturschaltkreis geeignet ist entsprechend an den benachbarten oder den zentralen Korrekturschaltkreis eine Anfrage zu senden an einer Detektionsüberlappung (Afk; Cck) teilzunehmen und entsprechend von dem benachbarten oder dem zentralen Korrekturschaltkreis eine Verfügbarkeitsanzeige (Pck, A2k) zu empfangen;
und dadurch, dass jeder zentrale Korrekturschaltkreis eine Analyse- und Steuervorrichtung aufweist, die geeignet ist, wenn die zentrale Elektrode Ladungen gesammelt hat, folgende Schritte auszuführen:
(a) Bestimmen, innerhalb einer Zeitspanne, eines möglichen Detektionsüberlapps zwischen der zentralen Elektrode und wenigstens einer der benachbarten Elektroden, basierend auf Detektionssignalen;
(b) im Fall eines Detektionsüberlapps, Bestimmen eines Detektionsüberlapps mit einer ersten Priorität mit einem benachbarten Korrekturschaltkreis, der priorisierter Schaltkreis genannt wird, für den die zweiten Detektionssignale des priorisierten benachbarten Korrekturschaltkreises und des zentralen Korrekturschaltkreises die höchste Wahrscheinlichkeit aufweisen zu einem gleichen empfangenen Photon zu gehören;
(c) Senden an, oder Empfangen von dem priorisierten benachbarten Korrekturschaltkreis einer Anfrage an einem Detektionsüberlapp teilzunehmen und Empfangen von oder Senden an den priorisierten benachbarten Korrekturschaltkreis einer Verfügbarkeitsanzeige; und
(d) Senden des ersten Signals (Hech) an die Verarbeitungseinheit, außer in dem Fall, in dem ein Detektionsüberlapp innerhalb der Zeitspanne bestimmt wurde und in dem eine Verfügbarkeitsanzeige an den priorisierten benachbarten Korrekturschaltkreis gesendet wurde.

2. Die Vorrichtung nach Anspruch 1, wobei jeder Korrekturschaltkreis (52) geeignet ist an die Verarbeitungseinheit (24) ein drittes Signal (Mx1) zu senden, das repräsentativ für die Energie der ionisierenden Strahlung ist, die das Ausbilden von Ladungen, die von der Elektrode (34), die mit dem Korrekturschaltkreis verbunden ist, gesammelt wurden, verursacht, wobei die Analyse- und Steuervorrichtung von jedem zentralen Korrekturschaltkreis geeignet ist der Verarbeitungseinheit das dritte Signal von dem zentralen Korrekturschaltkreis, erhöht durch das dritte Signal von dem priorisierten benachbarten Korrekturschaltkreis, bereitzustellen, wenn der priorisierte benachbarte Korrekturschaltkreis die Teilnahmeanfrage akzeptiert.

3. Die Vorrichtung nach Anspruch 2, wobei die Analyse- und Steuervorrichtung von jedem zentralen Korrekturschaltkreis geeignet ist an den priorisierten benachbarten Korrekturschaltkreis das dritte Signal (Mx1) von dem zentralen Korrekturschaltkreis zu senden, wenn eine Verfügbarkeitsanzeige an den priorisierten benachbarten Korrekturschaltkreis gesendet wurde.

4. Die Vorrichtung nach einem der Ansprüche 1 bis 3, wobei wenigstens einige zentrale Elektroden (34) jeweils mit wenigstens vier benachbarten Elektroden umgeben sind.

5. Die Vorrichtung nach einem der Ansprüche 1 bis 4, wobei jeder elektronische Korrekturschaltkreis (52) geeignet ist ein viertes analoges Signal (Amp) auszugeben, welches ein Extremum durchläuft, wenn Ladungen von der Elektrode (34), die mit dem elektronischen Korrekturschaltkreis verbunden ist, gesammelt werden, wobei das zweite Signal (H1 k) unterschiedlich zu dem ersten Signal (Hech) ist und ein binär Signal ist, welches zwischen Zuständen hin und her schaltet, wenn das vierte Signal, in absoluten Werten, größer ist als eine Schwelle.

6. Die Vorrichtung nach Anspruch 5, wobei jeder elektronische Korrekturschaltkreis (52) geeignet ist das erste Signal (Hech) auszugeben, das eine führende Flanke nach einer hinteren Flanke des zweiten Signals (H1 k) aufweist.

7. Die Vorrichtung nach Anspruch 4 und 5, wobei die Analyse- und Steuervorrichtung von jedem zentralen Korrekturschaltkreis geeignet ist den priorisierten benachbarten Korrekturschaltkreis zu bestimmen, welcher derjenige benachbarte Korrekturschaltkreis ist, der mit den benachbarten Elektroden (34) verbunden ist, die die Ladungen innerhalb der Zeitspanne gesammelt haben, und welcher das zweite Signal (H1 k) ausgibt, dessen führende Flanke am nächsten der folgenden führenden Flanke des zweiten Signals ist, das von dem zentralen Korrekturschaltkreis ausgeben wird.

8. Die Vorrichtung nach einem der Ansprüche 1 bis 7, wobei jeder elektronische Korrekturschaltkreis (52) geeignet ist ein fünftes binäres Signal (M1 k, Mk) konstanter Länge auszugeben, unterschiedlich zu dem ersten Signal (Hech) und von dem zweiten Signal (H1 k), das anzeigt, dass Ladungen von der Elektrode (34) gesammelt werden, die mit dem elektronischen Korrekturschaltkreis verbunden ist, wobei jeder zentrale Korrekturschaltkreis geeignet ist das fünfte Signal, das von dem zentralen Korrekturschaltkreis ausgegeben wird, an jeden benachbarten Korrekturschaltkreis zu senden, und geeignet ist von jedem benachbarten Korrekturschaltkreis, das fünfte Signal, das von jedem benachbarten Korrekturschaltkreis ausgegeben wird, zu empfangen.

9. Die Vorrichtung nach Anspruch 8, wobei der zentrale Korrekturschaltkreis geeignet ist zu bestimmen ob das logische Produkt des fünften Signals, das von dem zentralen Korrekturschaltkreis ausgegeben wird, und des fünften Signals, das von jedem benachbarten Korrekturschaltkreis ausgegeben wird, seinen Wert ändert.

10. Die Vorrichtung nach Anspruch 6 und 9, wobei jeder elektronische Korrekturschaltkreis (52) geeignet ist das fünfte Signal (M1 k, Mk) auszugeben, dessen führende Flanke sich mit der führenden Flanke des zweiten Signals (H 1 k) überlappt.

11. Die Vorrichtung nach einem der Ansprüche 1 bis 10, wobei die elektronischen Korrekturschaltkreise (52) identisch sind.

12. Die Vorrichtung nach einem der Ansprüche 1 bis 11, wobei die Analyse- und Steuervorrichtung von jedem zentralen Korrekturschaltkreis geeignet ist wenigstens zwei priorisierte benachbarte Korrekturschaltkreise zu bestimmen, wenn der zentrale Elektroden Ladungen gesammelt hat.

13. Ein Verfahren zum Detektieren einer ionisierenden Strahlung (14), wobei die ionisierende Strahlung das Ausbilden von Ladungen in einem Sensor (20) verursacht, wobei der Sensor einen Wafer (26) aus einem Halbleitermaterial aufweist, wobei eine erste Seite dieses Wafers durch eine oder mehr als eine Elektrode (32), die Kathoden genannt werden, abgedeckt ist, wobei die andere Seite durch mehrere Elektroden (34), die Anoden genannt werden, abgedeckt ist, wobei jede mit einem elektronischen Korrekturschaltkreis (52) verbunden ist, der geeignet ist eine Verarbeitungseinheit (24) mit einem ersten Signal (Hech) zu versorgen, das anzeigt, dass Ladungen durch die Elektrode, die mit dem elektrischen Korrekturschaltkreis verbunden ist, gesammelt werden, wobei jeder elektronische Korrekturschaltkreis eine Analyse- und Steuervorrichtung aufweist; wobei wenigstens eine Elektrode (34), die Zentralelektrode genannt wird, von wenigstens zwei Elektroden umgeben ist, die benachbarte Elektroden genannt werden, wobei der Korrekturschaltkreis, der mit der Zentralelektrode verbunden ist und der zentraler Korrekturschaltkreis genannt wird, geeignet ist Signale mit jedem der Korrekturschaltkreise auszutauschen, die mit den benachbarten Elektroden verbunden sind und die benachbarte Korrekturschaltkreise genannt werden;
**dadurch gekennzeichnet, dass** jeder zentrale oder benachbarte Korrekturschaltkreis geeignet ist entsprechende an den benachbarten oder den zentralen Korrekturschaltkreis ein zweites Detektionssignal (M1 k, Mk; H1 k, Hk) zu senden, wenn Ladungen entsprechend auf der zentralen Elektrode oder einer benachbarten Elektrode gesammelt werden;
dadurch, dass jeder zentrale oder benachbarte Korrekturschaltkreis geeignet ist entsprechend an den benachbarten oder den zentralen Korrekturschaltkreis eine Anfrage zu senden an einer Detektionsüberlappung (Afk; Cck) teilzunehmen und entsprechend von dem benachbarten oder dem zentralen Korrekturschaltkreis eine Verfügbarkeitsanzeige (Pck, A2k) zu empfangen;
und dadurch, dass das Verfahren für die Analyse- und Steuervorrichtung von jedem zentralen Korrekturschaltkreis, wenn die zentrale Elektrode Ladungen gesammelt hat, folgende Schritte aufweist:
(a) Bestimmen, innerhalb einer Zeitspanne, eines möglichen Detektionsüberlapps zwischen der zentralen Elektrode und wenigstens einer der benachbarten Elektrode, basieredn auf Detektionssignalen;
(b) im Fall eines Detektionsüberlapps, Bestimmen eines Detektionsüberlapps mit einer ersten Priorität mit einem benachbarten Korrekturschaltkreis, der priorisierter Schaltkreis genannt wird, für den die zweiten Detektionssignale des priorisierten benachbarten Korrekturschaltkreises und des zentralen Korrekturschaltkreises die höchste Wahrscheinlichkeit aufweisen zu einem gleichen empfangenen Photon zu gehören;
(c) Senden an, oder Empfangen von dem priorisierten benachbarten Korrekturschaltkreis einer Anfrage an einem Detektionsüberlapp teilzunehmen und Empfangen von oder Senden an den priorisierten benachbarten Korrekturschaltkreis einer Verfügbarkeitsanzeige; und
(d) Senden des ersten Signals (Hech) an die Verarbeitungseinheit, außer in dem Fall, in dem ein Detektionsüberlapp innerhalb der Zeitspanne bestimmt wurde und in dem eine Verfügbarkeitsanzeige an den priorisierten benachbarten Korrekturschaltkreis gesendet wurde.

## Claims

1. A device (50) for detecting an ionizing radiation (14) comprising a sensor (20) wherein the ionizing radiation causes the forming of charges, the sensor comprising a wafer (26) of a semiconductor material, a first face of said plate being covered with one or more than one electrodes (32) called cathodes, the other face being covered with several electrodes (34) called anodes each connected to a correction electronic circuit (52) capable of supplying a processing unit (24) with a first signal (Hech) indicating that charges are being collected by the electrode connected to said correction electronic circuit;
at least one electrode (34), called central electrode, being surrounded with at least two electrodes, called adjacent electrodes, the correction circuit connected to the central electrode, called central correction circuit, being capable of exchanging signals with each of the correction circuits connected to the adjacent electrodes, called adjacent correction circuits; **characterized in that** each central or adjacent correction circuit is capable of respectively sending to the adjacent or central correction circuit a second detection signal (M1ₖ, Mₖ; H1ₖ, Hk) when charges are being respectively collected on the central electrode or an adjacent electrode;
**in that** each central or adjacent correction circuit is capable of respectively sending to the adjacent or central correction circuit a request to participate in a detection overlap (Afₖ; Ccₖ) and respectively receiving from the adjacent or central correction circuit an availability indication (Pcₖ, A2ₖ);
and **in that** each central correction circuit comprises an analysis and control device, capable of, when the central electrode has collected charges:
(a) determining, within a time range, a possible detection overlap between the central electrode and at least one of the adjacent electrodes based on the detection signals;
(b) in the case of a detection overlap, determining a first priority detection overlap with an adjacent correction circuit, called priority circuit, for which the second detection signals of the priority adjacent correction circuit and of the central correction circuit have the highest probability of corresponding to a same received photon;
(c) transmitting to or receiving from the priority adjacent correction circuit a request to participate in a detection overlap and receiving from or transmitting to the priority adjacent correction circuit an availability indication; and
(d) transmitting said first signal (Hech) to the processing unit except in the case where a detection overlap has been determined within said time range and where an availability indication has been sent to the priority adjacent correction circuit.

2. The device of claim 1, wherein each correction circuit (52) is capable of transmitting to the processing unit (24) a third signal (Mx1) representative of the energy of the ionizing radiation having caused the forming of the charges collected by the electrode (34) connected to said correction circuit, wherein the analysis and control device of each central correction circuit is capable of supplying the processing unit, if said priority adjacent correction circuit accepts the participation request, with the third signal from the central correction circuit increased by the third signal from the priority adjacent correction circuit.

3. The device of claim 2, wherein the analysis and control device of each central correction circuit is capable of transmitting to the priority adjacent correction circuit the third signal (Mx1) from the central correction circuit when an availability indication has been sent to the priority adjacent correction circuit.

4. The device of any of claims 1 to 3, wherein at least some central electrodes (34) are each surrounded with at least four adjacent electrodes.

5. The device of any of claims 1 to 4, wherein each correction electronic circuit (52) is capable of outputting a fourth analog signal (Amp) which transits through an extremum when charges are collected by the electrode (34) connected to said correction electronic circuit, the second signal (H1ₖ) being different from the first signal (Hech) and being a binary signal which switches state when the fourth signal is greater, in absolute value, than a threshold.

6. The device of claim 5, wherein each correction electronic circuit (52) is capable of outputting the first signal (Hech), which has a leading edge subsequent to the trailing edge of the second signal (H1ₖ).

7. The device of claims 4 and 5, wherein the analysis and control device of each central correction circuit is capable of determining the priority adjacent correction circuit which is that of the adjacent correction circuits connected to adjacent electrodes (34) having collected charges within said time range which outputs the second signal (H1ₖ) having its leading edge most closely following the leading edge of the second signal output by the central correction circuit.

8. The device of any of claims 1 to 7, wherein each correction electronic circuit (52) is capable of outputting a fifth binary signal (M1ₖ, Mₖ) of constant duration, different from the first signal (Hech) and from the second signal (H1ₖ), indicating that charges are being collected by the electrode (34) connected to said correction electronic circuit, each central correction circuit being capable of transmitting, to each adjacent correction circuit, the fifth signal output by the central correction circuit and of receiving, from each adjacent correction circuit, the fifth signal output by each adjacent correction circuit.

9. The device of claim 8, wherein the central correction circuit is capable of determining whether the logical product of the fifth signal output by the central correction circuit and of the fifth signal output by each adjacent correction circuit changes value.

10. The device of claims 6 and 9, wherein each correction electronic circuit (52) is capable of outputting the fifth signal (M1ₖ, Mₖ) having its leading edge overlapping the leading edge of the second signal (H1ₖ).

11. The device of any of claims 1 to 10, wherein the correction electronic circuits (52) are identical.

12. The device of any of claims 1 to 11, wherein the analysis and control device of each central correction circuit is capable, when the central electrode has collected charges, of determining at least two priority adjacent correction circuits.

13. A method of detecting an ionizing radiation (14) wherein the ionizing radiation causes the forming of charges in a sensor (20), the sensor comprising a wafer (26) of a semiconductor material, a first face of said plate being covered with one or more than one electrodes (32) called cathodes, the other face being covered with several electrodes (34) called anodes each connected to an correction electronic circuit (52) capable of supplying a processing unit (24) with a first signal (Hech) indicating that charges are collected by the electrode connected to said correction electronic circuit, each correction electronic circuit comprising an analysis and control device;
at least one electrode (34), called central electrode, being surrounded with at least two electrodes, called adjacent electrodes, the correction circuit connected to the central electrode, called central correction circuit, being capable of exchanging signals with each of the correction circuits connected to the adjacent electrodes, called adjacent correction circuits;
**characterized in that** each central or adjacent correction circuit is capable of respectively sending to the adjacent or central correction circuit a second detection signal (M1ₖ, Mₖ; H1ₖ, Hk) when charges are respectively collected on the central electrode or an adjacent electrode;
**in that** each central or adjacent correction circuit is capable of respectively sending to the adjacent or central correction circuit a request to participate in a detection overlap (Afₖ; Ccₖ) and respectively receiving from the adjacent or central correction circuit an availability indication (Pcₖ, A2ₖ);
and **in that** the method comprises, for the analysis and control device of each central correction circuit, when the central electrode has collected charges, the steps of:
(a) determining, within a time range, a possible detection overlap between the central electrode and at least one of the adjacent electrodes based on the detection signals;
(b) in the case of a detection overlap, determining a first priority detection overlap with an adjacent correction circuit, called priority circuit, for which the second detection signals of the priority adjacent correction circuit and of the central correction circuit have the highest probability of corresponding to a same received photon;
(c) transmitting to or receiving from the priority adjacent correction circuit a request to participate in a detection overlap and receiving from or transmitting to the priority adjacent correction circuit an availability indication; and
(d) transmitting said first signal (Hech) to the processing unit except in the case where a detection overlap has been determined in said time range and where an availability indication has been sent to the priority adjacent correction circuit.
